# EUROPEAN PATENT APPLICATION

(11) **EP 3 301 879 A1**
(43) Date of publication of application: **04.04.2018**
(21) Application number: 15899457.4
(22) Date of filing: 20.11.2015
(51) Int. Cl.: H04L 29/06, H04W 12/06

(54) **DYNAMIC URL SELECTION METHOD, SYSTEM AND WIRELESS ACCESS POINT FOR PORTAL AUTHENTICATION**

(30) Priority: 28.07.2015 CN 201510452350
(71) Applicant: Phicomm (Shanghai) Co., Ltd., Shanghai 201616 (CN)
(72) Inventor: WANG, Bin, Shanghai 201616 (CN)
(74) Representative: Sun, Yiming
(86) International application number: PCT/CN2015/095142
(87) International publication number: WO 2017/016105

(57) **Abstract**

This disclosure provides a dynamic URL selection method for Portal authentication, comprising: sending a first HTTP request message when a communication connection is established between a STA and the wireless AP; identifying whether a received HTTP request message is the first HTTP request message, if so, obtaining transmission parameters of the wireless AP, calculating a dynamic selection value according to the transmission parameters, determining URLs for different category portal pages according to the dynamic selection value, a pre-stored first empirical value, and a second empirical value which is less than the first empirical value, sending an HTTP response message encapsulated with the determined Portal page URL to STA via redirection mode, and pushing the corresponding portal page to the STA so that the corresponding portal page is displayed on a browser of the STA, and if not, performing a conventional process on the received HTTP request message. The disclosure can shorten the time for transmission of the high-quality portal page from the portal server to the STA, improve the users' satisfaction and reduce the adverse impact on the interests of the advertisers.

## Description

### TECHNICAL FIELD

The present disclosure relates to the field of WLAN processing technology and relates to a selection method and system and, in particular, to a dynamic URL selection method, system and wireless access point for Portal authentication.

### BACKGROUND

Portals play a very important role in the current wireless LAN (WLAN) operations. A portal is a web application generally providing personalization, single logon, and gathering various information sources, and acts as a host for the information system presentation layer. A portal provides users with a convenient, practical, flexible approach for WLAN web authentication. A user who has established a connection with a WiFi hotspot provides information such as an account name and a password to the portal page and communicates thereby with a variety of broadband remote access servers (BRASs) which in turn communicate with authentication, authorization and accounting (AAA) systems for authentication and charging process of the user.

In a free public WiFi network, in order to control the accessed user information and broadcast the advertise effectively, the Portal authentication is usually deployed for the use WiFi access. In order to perform the authentication successfully, it is required for the Portal authentication server to push the unified Portal page to the browser of the STA. However, currently common solution for pushing the unified Portal page is associated with the following defects:
1) When the portal server adopts a high-quality portal page and maintains a high communication rate with the STA, the portal page can be displayed on the browser of the STA quickly. However, when the communication rate between the portal server and STA is low, it will take a long time for the portal page to be displayed on the browser, and before the portal page is completely displayed, the user is not allowed to access the Internet and is kept waiting status, which causes a poor user experience.
2) When the portal server employs a low-quality portal page, it will cause the poor quality advertisement display on the STA with the high communication rate, which affects the advertisers' benefits.

Therefore, providing a dynamic URL selection method, system and wireless access point for portal authentication to solve the problems of long time consuming on high quality Portal page pushing by the portal server and poor user experience on unable to access the internet caused by the transmission parameters of AP, which affects the advertisers' benefits and becomes a technical problem to be solved by the professionals in this field.

### SUMMAY

Embodiments of the present disclosure provide a dynamic URL selection method, system and wireless access point for portal authentication to solve the problems of long time consuming on high quality Portal page pushing by the portal server and poor user experience on unable to access the internet caused by the transmission parameters of AP, which affects the advertisers' benefits.

In order to achieve the above and other related objects, the present disclosure provides a dynamic URL selection method for portal authentication, wherein the method is used in a communication network including a portal server, a wireless AP and STAs, wherein the wireless AP supports a first frequency band and a second frequency band, wherein the STAs include STAs supporting the first frequency band and STAs supporting the second frequency band, and wherein the method includes the steps of: 1) sending a first HTTP request message when a communication connection is established between a STA and the wireless AP; 2) identifying whether a received HTTP request message is the first HTTP request message, if so, performing the next step, and if not, performing a conventional process on the received HTTP request message; 3) obtaining transmission parameters of the wireless AP and calculating a dynamic selection value according to the transmission parameters; 4) determining URLs for different category portal pages and sending an HTTP response message encapsulated with the determined Portal page URL to STA via redirection mode, according to the dynamic selection value, a pre-stored first empirical value, and a second empirical value which is less than the first empirical value; wherein the determined Portal page URL comprises a URL1 of first category Portal page, a URL2 of second category Portal page and a URL3 of third category Portal page; 5) according to the HTTP response message of the determined Portal page URL, pushing the corresponding portal page to the STA so that the corresponding portal page is displayed on a browser of the STA.

Optionally, the transmission parameters include the CPU load status of the wireless AP, the number of STAs supporting the first frequency band and connecting to the wireless AP, the number of STAs supporting both first frequency band and second frequency band and connecting to the wireless AP, and an average connection rate between the wireless AP and the STAs, and wherein the first frequency band is 2.4G frequency band and the second frequency band is 5G frequency band.

Optionally, if the STAis not configured a rate limit on the wireless AP, the dynamic selection value is calculated as: dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs, where P1, P2, P3 and P4 are linear combination coefficients.

Optionally, if the STA is configured with a maximum value VMAx rate limit by the wireless AP, the dynamic selection value is calculated as:
dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax), wherein P1, P2, P3, P4 and P5 are linear combination coefficients.

Optionally, step 4) further includes: when the dynamic selection value is greater than the first empirical value, sending an HTTP response message encapsulated with the first category Portal page URL to the STA via redirection mode; when the dynamic selection value is greater than or equal to the second empirical value and less than or equal to the first empirical value, sending an HTTP response message encapsulated with the second category Portal page URL to the STA via redirection mode; and when the dynamic selection value is less than the second empirical value, sending an HTTP response message encapsulated with the third category Portal page URL to the STA via redirection mode.

In another aspect, the present disclosure provides a dynamic URL selection system for Portal authentication, wherein the system used in a communication network including a portal server, a wireless access point (AP) and stations (STAs), wherein the wireless AP supports a first frequency band and a second frequency band, wherein the STAs include STAs supporting the first frequency band and STAs supporting the second frequency band, and wherein the system includes: a first sending module, configured to send a first HTTP request message when a communication connection is established between the STA and the wireless AP; an identifying module connected to the first sending module, configured to identify whether a received HTTP request message is the first HTTP request message, if so, calling the transmission parameters used to obtain the wireless AP and calculating the dynamic selection value for a first process module according to the transmission parameters, and if not, calling a second processing module to perform a conventional process on the received HTTP request message; a URL determining module connected to the first processing module, configured to determine URLs for different categories of portal pages according to the dynamic selection value, a pre-stored first empirical value and a second empirical value which is less than the first empirical value, and send an HTTP response message encapsulated with the determined Portal page URL to the STA via redirection mode, wherein the determined Portal page URL includes a URL1 of first category Portal page, a URL2 of second category Portal page and a URL3 of third category Portal page; a second sending module connected to the URL determining module, configured to send out the HTTP response message encapsulated with the determined Portal page URL; a portal pushing module connected to the second sending module, configured to push the corresponding portal page to the STA so that the corresponding portal page is displayed on a browser of the STA, according to the HTTP response message encapsulated with the determined Portal page URL.

Optionally, the transmission parameters in the first processing module include the CPU load status of the wireless AP, the number of STAs supporting the first frequency band and connecting to the wireless AP, the number of STAs supporting both first frequency band and second frequency band and connecting to the wireless AP, and an average connection rate between the wireless AP and the STAs, and wherein the first frequency band is 2.4G frequency band and the second frequency band is 5G frequency band.

Optionally, the first processing module is further configured to, if the STA is not configured a rate limit by the wireless AP, the dynamic selection value is calculated as:
dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs, where P1, P2, P3 and P4 are linear combination coefficients, and
if the STA is configured with a maximum value VMAx rate limit by the wireless AP, the dynamic selection value is calculated as:
   dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax).

Optionally, the URL determining module is further configured to, when the dynamic selection value is greater than the first empirical value, sending an HTTP response message encapsulated with the first category Portal page URL to the STA via redirection mode; when the dynamic selection value is greater than or equal to the second empirical value and less than or equal to the first empirical value, sending an HTTP response message encapsulated with the second category Portal page URL to the STA via redirection mode; and when the dynamic selection value is less than the second empirical value, sending an HTTP response message encapsulated with the third category Portal page URL to the STA via redirection mode.

In a further aspect, the present disclosure provides a wireless AP, including: wireless driving units, configured to receive and forward a first HTTP request message, the wireless driving units including a first frequency band driving unit and a second frequency band driving unit; a message processing unit connected to the wireless driving unit, configured to identify whether a received HTTP request message is the first HTTP request message, if so, calling the transmission parameters and calculating a Portal determining unit of the dynamic selection value , and if not, perform a conventional process on the received HTTP request message; determining URLs for different category Portal pages, by the message processing unit, according to the dynamic selection value, a pre-stored first empirical value, and a second empirical value which is less than the first empirical value; sending the HTTP respond message encapsulated with the determined Portal page URL to the STAvia redirection mode;. wherein the determined Portal page URL comprises a URL1 of first category Portal page, a URL2 of second category Portal page and a URL3 of third category Portal page.

Optionally, the transmission parameters of the wireless AP include the CPU load status of the wireless AP, the number of STAs supporting the first frequency band and connecting to the wireless AP, the number of STAs supporting both first frequency band and second frequency band and connecting to the wireless AP and an average connection rate between the wireless AP and the STAs, and wherein the first frequency band is 2.4G frequency band and the second frequency band is 5G frequency band.

Optionally, the portal determining unit is further configured to, if the STA is not configured a rate limit by the wireless AP, the dynamic selection value is calculated as:
dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs, where P1, P2, P3 and P4 are linear combination coefficients, and
if the STA is configured with a maximum value VMAx rate limit by the wireless AP, the dynamic selection value is calculated as:
   dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/Average Connection Rate between the wireless AP and STAs, P5 × 1/VMax), wherein P1, P2, P3, P4 and P5 are linear combination coefficients.

As mentioned above, dynamic URL selection method, system and wireless access point for portal authentication of the present disclosure show the following benefits:

The present disclosure can shorten the time for transmission of the high-quality portal page from the portal server to the STA, increase the users' satisfaction and reduce the adverse impact on the interests of the advertisers.

### BRIEF DESCRIPTION OF THE DRAWINGS

Fig. 1 is a flow chart showing a dynamic URL selection method for portal authentication of the present disclosure.
Fig. 2 is a structural schematic showing a dynamic URL selection system for portal authentication of the present disclosure.
Fig. 3 is a structural schematic showing a wireless access point of the present disclosure.

### Description of Reference Numerals of Elements

1 Dynamic URL Selection System for Portal Authentication
11 First Sending Module
12 Determining Module
13 First Processing Module
14 Second Processing Module
15 URL Determining Module
16 Second Sending Module
17 Portal Pushing Module
20 Wireless Access Point
201 Wireless Driving Units
201A First Frequency Band Driving Unit
201B Second Frequency Band Driving Unit
202 Message Processing Unit
203 Portal Determining Unit
30 Linux kernel
S1-S5 Steps

### DETAILED DESCRIPTION

The present disclosure will be described below by means of specific embodiments. Other advantages and effects of the disclosure will be readily understood by those skilled in the art from the disclosure herein. The present disclosure may also be implemented or utilized as other different specific embodiments, and various modifications or changes may be made to the details disclosed herein from different views and for different applications without departing from the spirit of the disclosure. It is noted that in case of no conflict the following embodiments and the features in the embodiments may be combined with one another.

It is noted that the drawings presented in the following embodiments are intended merely to illustrate the basic concept of the present disclosure in a schematic manner and hence only show the components related hereto which are not drawn to their quantities, shapes and sizes in actual implementations where their configurations, quantities and scales may vary arbitrarily and their arrangements may also be more complex.

The dynamic URL selection method and system for portal authentication according to the present disclosure are based on when a station (STA) is connected to an access point (AP), the AP will dynamically assign a Portal URL in line with the transmission capacity to the STA according to CPU load status of the AP, the number of STAs connecting to the AP and the connecting rate between the AP and STA. Different quality Portal pages are loaded on the Portal URL, sometimes the size of a high quality Portal page is up to 10MB with high downloading speed on the STA, while the size of a high quality Portal page is low to 10KB with low downloading speed on the STA.

### Example 1

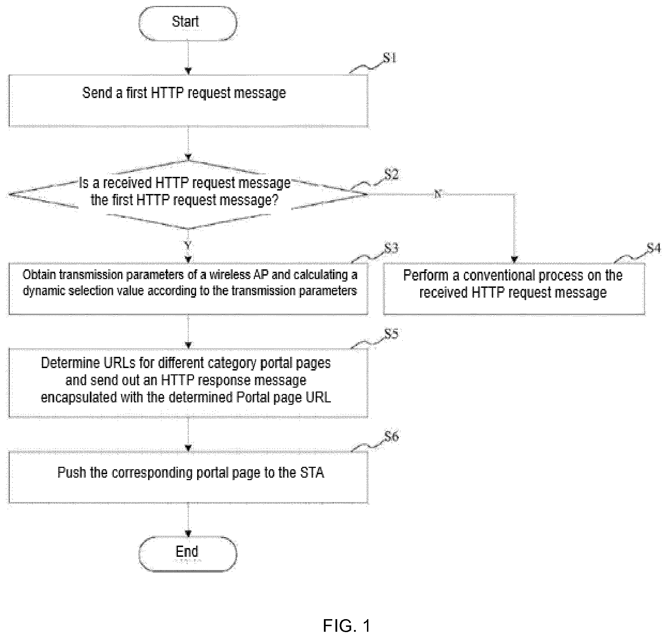

A dynamic URL selection method for Portal authentication according to this embodiment is used in a communication network including a portal server, a wireless access point (AP), and stations (STAs), wherein the wireless AP supports a first frequency band and a second frequency band, wherein the STAs include STAs supporting the first frequency band and STAs supporting the second frequency band, wherein the first frequency band is 2.4G frequency band, and the second frequency band is 5G frequency band. That is, the STAs include STAs supporting the 2.4G frequency band and the 5G frequency band. Fig. 1 is a flow chart schematically illustrating the dynamic URL selection method for Portal authentication. As shown in Fig. 1, the method includes the following steps:
S1: the STA sends a first HTTP request message when a communication connection is established between a STA and the wireless AP.
S2: when the wireless AP receives a HTTP request message from the STA, it determines whether the received HTTP request message is the first HTTP request message. If so, step S3 is performed. If not, step 4 i.e., conventional process on the received HTTP request message is performed. In this embodiment, the conventional process on the HTTP request message is a forward, parsing or another processing and will not be described in detail herein. In this embodiment, a criterion used to determine whether the received HTTP request message is the first HTTP request message is whether a format of the HTTP request message detected by the wireless AP is identical to that of the first HTTP request message or whether the HTTP request message is detected by the wireless AP for the first time.
S3: the wireless AP retrieves the transmission parameters and calculates a dynamic selection value according to the transmission parameters. The transmission parameters include the CPU load status of the wireless AP, the number of STAs supporting the first frequency band and connecting to the wireless AP, the number of STAs supporting both first frequency band (2.4 G frequency band) and second frequency band (5 G frequency band) and connecting to the wireless AP and an average connection rate between the wireless AP and the STAs.

If the STA is not configured a rate limit on the wireless AP, the dynamic selection value is calculated as:
dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs, where P1, P2, P3 and P4 are linear combination coefficients.
if the STA is configured with a maximum value VMAx rate limit by the wireless AP, the dynamic selection value is calculated as:
   dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax), wherein P1, P2, P3, P4 and P5 are linear combination coefficients determined by simulation experiments.

S5: The wireless AP determines URLs for different category portal pages according to the dynamic selection value, a pre-stored first empirical value (M0) and a second empirical value (M1) which is less than the first empirical value (M0) and sends an HTTP response message encapsulated with the determined Portal page URL to STA via redirection mode. The URL for a portal page of the determined type includes a URL1 of first category Portal page, a URL2 of second category Portal page and a URL3 of third category Portal page. The pre-stored first empirical value (M0) and the second empirical value (M1) which is less than the first empirical value (M0) are determined by a portal manager based on his/her experience obtained from practical scenarios.

In this embodiment, the process to determine URLs for different category portal pages is as follows.

When the dynamic selection value (M) is greater than the first empirical value (M0), i.e., M>M0, an HTTP response message encapsulated with the first category Portal page URL, which is a pseudo response message, is sent to the STA by redirection. In this embodiment, a URL for a first category portal page represents a URL of a low quality level Portal page.

When the dynamic selection value is greater than or equal to the second empirical value and less than or equal to the first empirical value, i.e., M0≥M≥M1, an HTTP response message encapsulated with the second category Portal page URL, which is a pseudo response message, is sent to the STA by redirection. In this embodiment, a URL for a second category portal page represents a URL of a medium quality level Portal page.

When the dynamic selection value is less than the second empirical value, i.e., M<M1, an HTTP response message encapsulated with the third category Portal page URL, which is a pseudo response message, is sent to the STA by redirection. In this embodiment, a URL for a third category page represents a URL of a high quality level Portal page.

S6: According to the HTTP response message of the determined Portal page URL, the portal server pushes the corresponding portal page to the STA so that the corresponding portal page is displayed on a browser of the STA.

The authentication by the portal is accomplished upon completion of step S1-S5.

The dynamic URL selection method for Portal authentication according to this embodiment can shorten the time for transmission of the high-quality portal page from the portal server to the STA, improve the users' satisfaction and reduce the adverse impact on the interests of the advertisers.

### Example 2

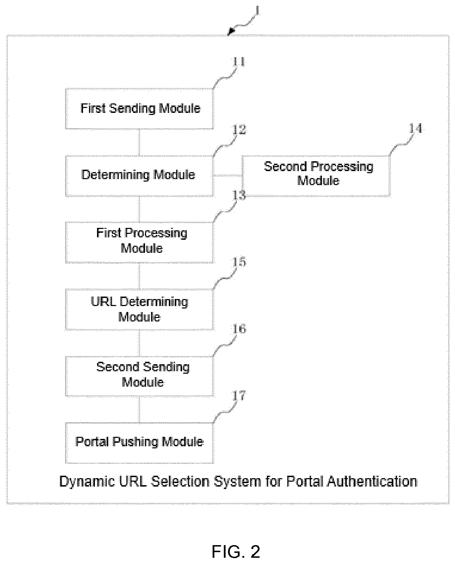

In this embodiment, a dynamic URL selection system 1 for Portal authentication is provided and is used in a communication network including a portal server, a wireless AP and STAs. The wireless AP supports a first frequency band and a second frequency band. The STAs include STAs supporting the first frequency band and STAs supporting the second frequency band. The first frequency band is 2.4G frequency band, and the second frequency band is 5G frequency band. That is, the STAs include STAs supporting the 2.4G frequency band and STAs supporting the 5G frequency band. Fig. 2 is a structural schematic illustrating the principles of the dynamic URL selection system for Portal authentication. As shown in Fig. 2, the system 1 includes a first sending module 11, a determining module 12, a first processing module 13, a second processing module 14, a URL determining module 15, a second sending module 16 and a portal pushing module 17.
the first sending module 11 is configured to send a first HTTP request message when a communication connection is established between the STA and the wireless AP.

The determining module 12 is connected to the first sending module 11 and is configured to whether a received HTTP request message is the first HTTP request message. If so, the first processing module 13 is called to retrieve transmission parameters of the wireless AP and calculate dynamic selection value according to the transmission parameters. If not, the second processing module 14 is called to perform a conventional process on the received HTTP request message. The transmission parameters in the first processing module 13 include the CPU load status of the wireless AP, the number of STAs supporting the first frequency band and connecting to the wireless AP, the number of STAs supporting both first frequency band (2.4G frequency band) and second frequency band (5G frequency band) and connecting to the wireless AP, and an average connection rate between the wireless AP and the STAs. The process to calculate the dynamic selection value by the first processing module 13 includes:
if the STA is not configured a rate limit on the wireless AP, the dynamic selection value is calculated as:
   dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs, where P1, P2, P3 and P4 are linear combination coefficients.
if the STA is configured with a maximum value VMAx rate limit by the wireless AP, the dynamic selection value is calculated as:
   dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax), wherein P1, P2, P3, P4 and P5 are linear combination coefficients determined by simulation experiments.

In this embodiment, the second processing module 14 is configured to perform the conventional process on the HTTP request message. The conventional process on the HTTP request message is a forward, parsing or another processing and will not be described in detail herein.

The URL determining module 15 is connected to the first processing module 13 and is configured to determine URLs for different category portal pages and sending an HTTP response message encapsulated with the determined Portal page URL to STA via redirection mode, according to the dynamic selection value, a pre-stored first empirical value, and a second empirical value which is less than the first empirical value; The determined Portal page URL comprises a URL1 of first category Portal page, a URL2 of second category Portal page and a URL3 of third category Portal page. The pre-stored first empirical value (M0) and the second empirical value (M1) which is less than the first empirical value (M0) are determined by a portal manager based on his/her experience obtained from practical scenarios. In this embodiment, the process to determine URLs for different category portal pages by the URL determining module 15 is as follows.

When the dynamic selection value (M) is greater than the first empirical value (M0), i.e., M>M0, an HTTP response message encapsulated with the first category Portal page URL, which is a pseudo response message, is sent to the STA by redirection. In this embodiment, a URL for a first category portal page represents a URL of a low quality level Portal page.

When the dynamic selection value is greater than or equal to the second empirical value and less than or equal to the first empirical value, i.e., M0≥M≥M1, an HTTP response message encapsulated with the second category Portal page URL, which is a pseudo response message, is sent to the STA by redirection. In this embodiment, a URL for a second category portal page represents a URL of a medium quality level Portal page.

When the dynamic selection value is less than the second empirical value, i.e., M<M1, an HTTP response message encapsulated with the third category Portal page URL, which is a pseudo response message, is sent to the STA by redirection. In this embodiment, a URL for a third category page represents a URL of a high quality level Portal page.

The second sending module 16 is connected to the URL determining module 15 and configured to send out the HTTP response message encapsulated with the URL for the determined category portal page.

The portal pushing module 17 is connected to the second sending module 16 and is configured to push the corresponding portal page to the STA so that the corresponding portal page is displayed on a browser of the STA, according to the HTTP response message encapsulated with the determined Portal page URL.

The dynamic URL selection system for Portal authentication according to this embodiment is used in a communication network including a portal server, a wireless AP and STAs and can shorten the time for transmission of the high-quality portal page from the portal server to the STA, improve the users' satisfaction and reduce the adverse impact on the interests of the advertisers.

### Example 3

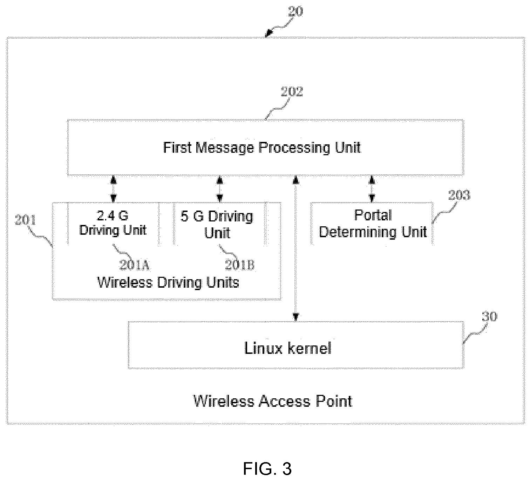

In this embodiment, a wireless AP 20 is provided, as shown in Fig. 3, a structural schematic showing the principles of the wireless access point. As shown in Fig. 3, the wireless access point 20 includes a wireless driving unit 201, a message processing unit 202 and a portal determining unit 203. In this embodiment, the wireless access point 20 incorporates a Linux kernel 30.

The wireless driving unit 201 is configured to receive and forward a first HTTP request message. The wireless driving unit includes a first frequency band driving unit and a second frequency band driving unit. The first frequency band driving unit is 2.4 G frequency band driving unit 201A, the second frequency band driving unit is 5G frequency band driving unit 201B.

The first message processing unit 202 is connected to the wireless driving unit 201 and is configured to identify whether a received HTTP request message is the first HTTP request message. If so, the portal deciding unit 203 is called to retrieve the transmission parameters and calculate a Portal determining unit of the dynamic selection value. If not, a conventional process is performed on the received HTTP request message. The message processing unit 202 determines URLs for different category portal pages according to the dynamic selection value, a pre-stored first empirical value, and a second empirical value which is less than the first empirical value; sending the HTTP respond message encapsulated with the determined Portal page URL to the STA via redirection mode. The URL for a portal page of the determined type includes a URL1 of first category Portal page, a URL2 of second category Portal page and a URL3 of third category Portal page.

The process to calculate the dynamic selection value by the portal determining unit 203 specifically includes:
if the STA is not configured a rate limit on the wireless AP, the dynamic selection value is calculated as:
   dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs, wherein P1, P2, P3 and P4 are linear combination coefficients.
if the STA is configured with a maximum value VMAx rate limit by the wireless AP, the dynamic selection value is calculated as:
   dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax), wherein P1, P2, P3, P4 and P5 are linear combination coefficients determined by simulation experiments.

The process to determine URLs for different category portal pages by the first message processing unit 202 is as follows.

When the dynamic selection value (M) is greater than the first empirical value (M0), i.e., M>M0, an HTTP response message encapsulated with the first category Portal page URL, which is a pseudo response message, is sent to the STA by redirection. In this embodiment, a URL for a first category portal page represents a URL of a low quality level Portal page.

When the dynamic selection value is greater than or equal to the second empirical value and less than or equal to the first empirical value, i.e., M0≥M≥M1, an HTTP response message encapsulated with the second category Portal page URL, which is a pseudo response message, is sent to the STA by redirection. In this embodiment, a URL for a second category portal page represents a URL of a medium quality level Portal page.

When the dynamic selection value is less than the second empirical value, i.e., M<M1, an HTTP response message encapsulated with the third category Portal page URL, which is a pseudo response message, is sent to the STA by redirection. In this embodiment, a URL for a third category page represents a URL of a high quality level Portal page.

In summary, the dynamic URL selection method, system and wireless access point for Portal authentication, of the present disclosure can shorten the time for transmission of the high-quality portal page from the portal server to the STA, improve the users' satisfaction and reduce the adverse impact on the interests of the advertisers. Therefore, the present disclosure has effectively overcome the various drawbacks of the prior art and has a high value in industrial use.

The embodiments presented above merely explain the principles and effects of the present disclosure exemplarily and are not intended to limit the disclosure. Any person familiar with the art can make modifications or changes to the above embodiments without departing from the spirit and scope of the disclosure. Accordingly, all equivalent modifications or changes made by those of ordinary skill in the art without departing from the spirit and technical concept disclosed herein are intended to be embraced by the claims of the present disclosure.

## Claims

1. A dynamic URL selection method for Portal authentication, wherein the method is used in a communication network comprising a Portal server, a wireless access point (AP), and stations (STAs), wherein the wireless AP supports a first frequency band and a second frequency band, wherein the STAs include STAs supporting the first frequency band and STAs supporting the second frequency band, and wherein the dynamic URL selection method for Portal authentication comprises the steps of:
1) sending a first HTTP request message when a communication connection is established between a STA and the wireless AP;
2) identifying whether a received HTTP request message is the first HTTP request message; if yes, performing the next step; or if not, performing a conventional process on the received HTTP request message;
3) obtaining transmission parameters of the wireless AP and calculating a dynamic selection value according to the transmission parameters;
4) determining URLs for different category Portal pages and sending an HTTP response message encapsulated with the determined Portal page URL to STA via a way of redirection, according to the dynamic selection value, a pre-stored first empirical value, and a second empirical value which is less than the first empirical value; wherein the determined Portal page URL comprises a URL1 of a first category Portal page, a URL2 of a second category Portal page and a URL3 of a third category Portal page;
5) according to the HTTP response message of the determined Portal page URL, pushing the corresponding portal page to the STA so that the corresponding portal page is displayed on a browser of the STA.

2. The dynamic URL selection method for Portal authentication according to claim 1, wherein the transmission parameters comprise: a CPU load status of the wireless AP, a number of STAs supporting the first frequency band and connecting to the wireless AP, a number of STAs supporting both first frequency band and second frequency band and connecting to the wireless AP, and an average connection rate between the wireless AP and the STAs, and wherein the first frequency band is 2.4G frequency band and the second frequency band is 5G frequency band.

3. The dynamic URL selection method for Portal authentication according to claim 2, wherein if the STA is not configured a rate limit on the wireless AP, the dynamic selection value is calculated as:
dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs; wherein P1, P2, P3 and P4 are linear combination coefficients.

4. The dynamic URL selection method for Portal authentication according to claim 2, wherein if the STA is configured with a maximum value VMax rate limit by the wireless AP, the dynamic selection value is calculated as:
dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax); wherein P1, P2, P3, P4 and P5 are linear combination coefficients.

5. The dynamic URL selection method for Portal authentication according to claim 3, wherein step 4) further comprises: when the dynamic selection value is greater than the first empirical value, sending an HTTP response message encapsulated with the first category Portal page URL to the STA via the way of redirection;
when the dynamic selection value is greater than or equal to the second empirical value and less than or equal to the first empirical value, sending an HTTP response message encapsulated with the second category Portal page URL to the STA via the way of redirection; and
when the dynamic selection value is less than the second empirical value, sending an HTTP response message encapsulated with the third category Portal page URL to the STA via the way of redirection.

6. A dynamic URL selection system for Portal authentication, wherein the system is used in a communication network comprising a Portal server, a wireless access point (AP) and stations (STAs), wherein the wireless AP supports a first frequency band and a second frequency band, wherein the STAs include STAs supporting the first frequency band and STAs supporting the second frequency band, and wherein the system comprises:
a first sending module, configured to send a first HTTP request message when a communication connection is established between the STA and the wireless AP;
an identifying module connected to the first sending module, configured to identify whether a received HTTP request message is the first HTTP request message; if yes, calling the transmission parameters used to obtain the wireless AP and calculating the dynamic selection value for a first process module according to the transmission parameters; or if not, calling a second processing module to perform a conventional process on the received HTTP request message;
a URL determining module connected to the first processing module, configured to determine URLs for different categories of Portal pages according to the dynamic selection value, a pre-stored first empirical value and a second empirical value which is less than the first empirical value, and send an HTTP response message encapsulated with the determined Portal page URL to the STA via redirection mode, wherein the determined Portal page URL includes a URL1 of a first category Portal page, a URL2 of a second category Portal page and a URL3 of a third category Portal page;
a second sending module connected to the URL determining module, configured to send out the HTTP response message encapsulated with the determined Portal page URL;
a Portal pushing module connected to the second sending module, configured to push the corresponding portal page to the STA so that the corresponding Portal page is displayed on a browser of the STA, according to the HTTP response message encapsulated with the determined Portal page URL.

7. The dynamic URL selection system for Portal authentication according to claim 6, wherein the transmission parameters in the first processing module comprise a CPU load status of the wireless AP, a number of STAs supporting the first frequency band and connecting to the wireless AP, a number of STAs supporting both first frequency band and second frequency band and connecting to the wireless AP, and an average connection rate between the wireless AP and the STAs; wherein the first frequency band is 2.4G frequency band and the second frequency band is 5G frequency band.

8. The dynamic URL selection system for Portal authentication according to claim 7, wherein the first processing module is further configured to:
if the STA is not configured a rate limit by the wireless AP, the dynamic selection value is calculated as:
dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs; wherein P1, P2, P3 and P4 are linear combination coefficients, or
if the STA is configured with a maximum value VMax rate limit by the wireless AP, the dynamic selection value is calculated as:
dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/average connection rate between the wireless AP and the STAs, P5 × 1/VMax); wherein P1, P2, P3, P4 and P5 are linear combination coefficients.

9. The dynamic URL selection system for Portal authentication according to claim 7, wherein the URL determining module is further configured to:
when the dynamic selection value is greater than the first empirical value, sending an HTTP response message encapsulated with the first category Portal page URL to the STA via the way of redirection;
when the dynamic selection value is greater than or equal to the second empirical value and less than or equal to the first empirical value, sending an HTTP response message encapsulated with the second category Portal page URL to the STA via the way of redirection; and
when the dynamic selection value is less than the second empirical value, sending an HTTP response message encapsulated with the third category Portal page URL to the STA via the way of redirection.

10. A wireless access point (AP), comprising:
wireless driving units, configured to receive and forward a first HTTP request message, the wireless driving units comprise a first frequency band driving unit and a second frequency band driving unit;
a message processing unit connected to the wireless driving unit, configured to identify whether a received HTTP request message is the first HTTP request message; if yes, calling the transmission parameters and calculating a Portal determining unit of the dynamic selection value according to the transmission parameters; or if not, perform a conventional process on the received HTTP request message; determining URLs for different category Portal pages, by the message processing unit, according to the dynamic selection value, a pre-stored first empirical value, and a second empirical value which is less than the first empirical value; sending the HTTP respond message encapsulated with the determined Portal page URL to the STA via a way of redirection; wherein the determined Portal page URL comprises a URL1 of a first category Portal page, a URL2 of a second category Portal page and a URL3 of a third category Portal page.

11. The wireless AP according to claim 10, wherein the transmission parameters of the wireless AP comprise a CPU load status of the wireless AP, a number of STAs supporting the first frequency band and connecting to the wireless AP, a number of STAs supporting both first frequency band and second frequency band and connecting to the wireless AP and an average connection rate between the wireless AP and the STAs; wherein the first frequency band is 2.4G frequency band and the second frequency band is 5G frequency band.

12. The wireless AP according to claim 11, wherein the Portal determining unit is further configured to: if the STA is not configured a rate limit by the wireless AP, the dynamic selection value is calculated as:
dynamic selection value = P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/ average connection rate between the wireless AP and the STAs;, wherein P1, P2, P3 and P4 are linear combination coefficients; or
if the STA is configured with a maximum value VMax rate limit by the wireless AP, the dynamic selection value is calculated as:
dynamic selection value = Max (P1 ×CPU load status of the wireless AP + P2 ×the number of STAs supporting the first frequency band and connecting to the wireless AP + P3 ×the number of STAs supporting both first frequency band and second frequency band and connecting to the wireless AP + P4/Average Connection Rate between the wireless AP and STAs, P5 × 1/VMax); wherein P1, P2, P3, P4 and P5 are linear combination coefficients.
